# EUROPEAN PATENT APPLICATION

(11) **EP 3 026 558 A1**
(43) Date of publication of application: **01.06.2016**
(21) Application number: 14306919.3
(22) Date of filing: 28.11.2014
(51) Int. Cl.: G06F 11/10, G06F 21/00

(54) **Method and device for providing verifying application integrity**

(71) Applicant: Thomson Licensing, 92130 Issy-les-Moulineaux (FR)
(72) Inventor: Salmon-Legagneur, Charles, 35576 Cesson Sévigné (FR); Karroumi, Mohamed, 35576 Cesson Sévigné (FR)
(74) Representative: Browaeys, Jean-Philippe

(57) **Abstract**

A device (110) receives (S302) an APK file for the application, during which the code is modified (S306). A checksum for the modified code is generated (S308) and signed (S310) using a signing key (215) of a trusted entity (214) in the OS (210) of the device (110). The signed checksum and a certificate for the signing key (216) are stored (S312) in reserved spaces (226, 228) in memory (112). The modified application may then be executed (S314) during which an integrity verification module (232) in the library (230) of the application (220) can verify the integrity of the modified application. The solution is particularly suitable for devices using the Android OS since the DEX during installation is optimized to an ODEX for which there is no certified checksum.

## Description

### TECHNICAL FIELD

The present disclosure relates generally to computer systems and in particular to integrity of software code in such systems.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

It is, for various reasons, often desirable to ensure that processing devices execute software that has not been tampered with. To this end, different techniques can be used to protect a software image against tampering attacks. The most common technique is to compute a signature or a checksum over code segments and then verify the signature or checksums at a later stage. Checksums are generally computed and verified without any secret while the generation of a cryptographic signature requires a private key and verification of the signature the corresponding public key.

An example of checksum-based protection is CRC32 for the Portable Executable (PE) format used in the Windows operating system. A PE header contains a CRC32 field that gives the checksum of the corresponding code section. To bypass the protection successfully, an attacker first modifies the code section and then replaces the original checksum with a new value computed over the modified code section. This type of attack is possible since the attacker does not need any secret to update checksums of modified code sections.

Given the weakness of checksums, cryptographic signatures are a preferred solution. The generation of the signature is performed before the code release and uses a private (and thus secret) key. The associated public key is appended to the code and later used to check the code integrity at installation of the code or at runtime. An attacker can still modify the code, but since a correct signature for the code cannot be generated without the private key, the attack fails.

Many solutions exist for checking the integrity of applications based on native code, such as the solutions provided by Arxan (GuardIT™), Metaforic (Metafortress™), etc. Native code is a set of assembler instructions directly executable by the processor. The set of instructions does not change after installation, which means that a program integrity value remains the same before and after installation (i.e. remains constant over time). In this case, the signature can be generated beforehand and delivered with the application package.

On the other hand, applications with interpreted code - such as code written in Java, Android DEX code, etc. - comprise intermediate instructions that must be passed through an interpreter before it is executed. Unlike native code, interpreted code can be modified after installation time for optimization purposes. The code modification is generally very dependent on the target platform and is thus not necessarily predictable. If the code is modified, a signature generated at compilation time cannot be used to check code integrity and authenticity dynamically at runtime.

To distribute and install application software onto the previously mentioned Android operating system a file format called APK - Android Application PacKage - is used. To make an APK file, a program for Android is first compiled to an intermediate language, and then its parts are packaged into a compressed archive file (ZIP format). The archive file contains the entire program code in a single DEX (Dalvik Executable code) file, various resources (e.g. image files), and the manifest of the APK file. The archive file comprises two additional files: CERT.SF and CERT.RSA. CERT.SF contains cryptographic hashes of all other archive files; CERT.RSA contains the public key used for signature verification. Only CERT.SF is signed with the RSA private key. The RSA signature for the CERT.SF enables validation of the entire content of the APK file during installation. Indeed, all the files mentioned in the CERT.SF file are *indirectly* signed because CERT.SF contains their hashes. Altering any file before installation would cause an error because the software would detect that a file digest does not match the hash in the CERT.SF file. Alternatively, modifying a cryptographic hash value inside the CERT.SF file (as in the attack against checksum-based verification already described) would lead to an error during the signature verification.

A DEX file header also contains a global checksum for the contents of the DEX file. At the first execution of the application, the Android system uses an optimizer which modifies a DEX interpreted byte code into an optimized machine-instructions sequence called ODEX (Optimized DEX) just in time before execution. The optimizer also updates the checksum. The ODEX file is then stored in a specific repository within the Android file system for future use. The ODEX file then becomes the reference for the application software and, when it is present, the original DEX file is not used anymore.

At runtime, the system may verify the integrity of the application using the ODEX checksum. However this option is not set by default in the Android operating system and the Dalvik machine, which is used to execute ODEX code, does not always check ODEX checksums, since checksum verification has a non-negligible impact on execution performance.

Thus it can be seen that in an Android system, the APK signature is verified only at installation time. Furthermore, the APK is not signed by a central authority; the developers use their own non-trusted self-signed certificates that can be easily generated.

As already mentioned, Android applications use an interpreter portable format (DEX). This binary format must execute on a large set of devices with different architectures and characteristics: ARM, x86, MIPS, Little/Big Endian etc. In order to improve performance, the DEX code is modified at the first use of the application to produce the ODEX that is optimized for the target device. During optimization, various things can be modified in the code: instructions can be replaced by others, the alignment of instructions may be changed, the byte order can be swapped, and so on.

The optimization then raises a security issue. While the signature of the DEX file can still be verified, this is not the case for the ODEX file since it has been modified and its integrity is no more linked to the original DEX signature. In other words, integrity and authenticity can only be verified at installation, but not at runtime since an attacker is able to modify the ODEX code and update the checksum in the header accordingly.

The system is thus vulnerable to at least two classes of attacks: the remote attack and the root attack. In the remote attack, a downloaded malicious application elevates its privileges and gains system permissions. The malicious application may then tamper with ODEX files stored on the Dalvik cache repository of the SD card. In the root attack, the attacker obtains an Android device, for example by purloining the device or by accessing the device when the owner is absent without locking the device session. The attacker can then download the application from the SD card through a USB link, modify the application, and then push the modified application back onto the SD card. For the latter attack to be successful, the device must be "rooted" (i.e. allow "root access" control of the device's Android system).

The trust in Android application integrity can thus be broken during the application's life cycle. It is possible to trust what is installed on an Android system, but not necessarily what is running.

It will be appreciated that it is desired to have a solution that overcomes at least part of the problems related to the integrity and authenticity of interpreted code applications. The present disclosure provides such a solution.

### SUMMARY OF DISCLOSURE

In a first aspect, the disclosure is directed to a device for processing an application. The device comprises an interface configured to receive the application, memory configured to store the application and a signed checksum for a modified application and a processing unit configured to modify the application to obtain a modified application, generate a checksum for the modified application, sign the checksum for the modified application using a signing key, and store the signed checksum in the memory.

Various embodiments of the first aspect include:
That the application comprises a first checksum and that the processing unit is further configured to use the first checksum to verify the integrity of the application. It is advantageous that the first checksum is signed and that the processing unit is further configured to verify the signature for the first checksum.

That the processing unit is further configured to use the signed checksum to verify the integrity of the modified application during execution of the modified application.

That the application is implemented as Dalvik Executable code and the modified application is implemented as Optimized Dalvik Executable code.

That the device is a smartphone or a tablet.

That the signing key is protected using software protection techniques.

That the processing unit is configured to generate a plurality of checksums for the modified code, each checksum being generated for a different part of the modified code and to sign the plurality of checksums for the modified code.

That the processing unit is configured to generate a single signature for the plurality of checksums for the modified code.

That the memory is further configured to store the modified application and a certificate for the signing key, and that the processor is further configured to store the a certificate for the signing key in the memory.

In a second aspect, the disclosure is directed to a method for processing an application. A device receives the application, modifies the application to obtain a modified application, generates a checksum for the modified application, signs the checksum for the modified application using a signing key, and stores the signed checksum in the memory in the memory.

Various embodiments of the second aspect include:
That the application comprises a first checksum and that the method further comprises using the first checksum to verify the integrity of the application.

That the first checksum is signed and that the method further comprises verifying the signature for the first checksum.

That the method further comprises using the signed checksum to verify the integrity of the modified application during execution of the modified application.

That the method further comprises storing the modified application and a certificate for the signing key in the memory.

### BRIEF DESCRIPTION OF DRAWINGS

Preferred features of the present disclosure will now be described, by way of non-limiting example, with reference to the accompanying drawings, in which
Figure 1 illustrates an exemplary system in which the disclosure is implemented;
Figure 2 illustrates functional aspects of the exemplary system; and
Figure 3 illustrates a preferred embodiment of a method according to a preferred embodiment of the present disclosure.

### DESCRIPTION OF EMBODIMENTS

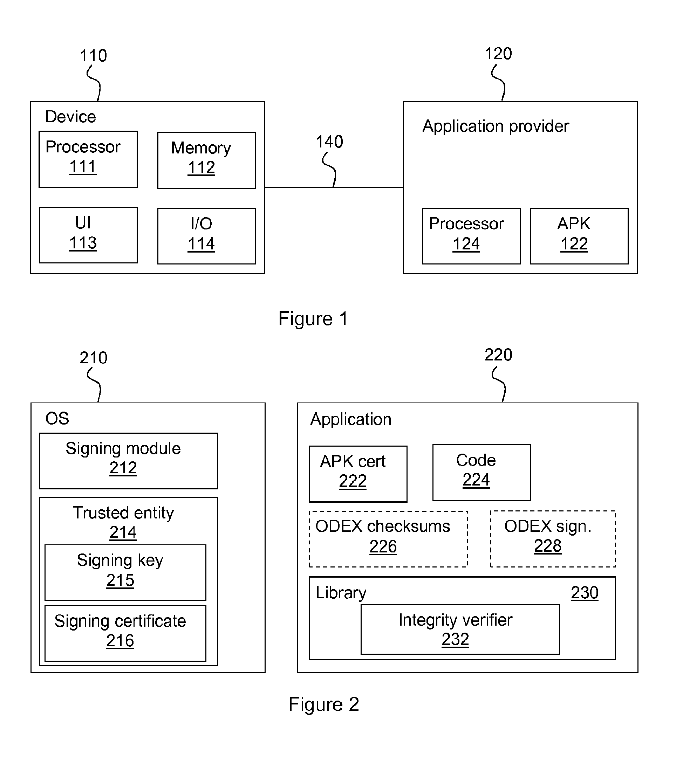

Figure 1 illustrates an exemplary system in which the disclosure is implemented. The system comprises a device 110 and an application provider (application store) 120. The device 110 can be any kind of suitable device running an Android OS, such as a smartphone or a tablet, and it comprises at least one hardware processing unit ("processor") 111, memory 112, a user interface 113 for interacting with a user, and a communications interface 114 for communication with the application provider 120 over a connection 140 such as the Internet. The skilled person will appreciate that the illustrated device is very simplified for reasons of clarity and that real devices in addition would comprise features such as power supplies and persistent storage. The application provider 120 stores at least one application APK file 122 that can be downloaded by the device 110, the APK file comprising an APK certificate signed by a signatory entity.

Figure 2 illustrates functional aspects of the exemplary system. The OS 210 of the device 110 comprises a signing module 212 and an embedded trusted entity 214. The trusted entity 214 stores a signing key 215 with a corresponding signing certificate 216. The signing key 215 may be (at least statistically) unique for the device or for the version of the OS, and it may be protected by a device key that is unique for each device. The certificate is signed by the signatory entity, directly or through a chain of trust.

The application 220 comprises the APK certificate 222 signed by the signatory entity, application code 224 (DEX before installation and ODEX after installation), reserved space 226 for storing ODEX checksums, reserved space 228 for storing an ODEX signature and a signing certificate, and a library 230 comprising an integrity verification module 232.

The signing module 212 is configured to verify the APK certificate 222 of the application, compute an ODEX checksum for the application and sign the ODEX checksum at installation time of the application. The signing module 212 can be implemented in the Dalvik Virtual Machine or in the unit that optimizes the DEX. The APK certificate 222 is verified any suitable prior art verification technique. The signing module 212 is configured to insert the ODEX checksum and the signature in the reserved spaces 226, 228 in the cache repository of the application. The signing module 212 also stores the signing certificate 216 in the cache repository.

It will be appreciated that it is possible to use a plurality of checksums, for example one checksum for the entire DEX code and at least one further checksum for a section of the DEX code. In this instance, the signing module 212 verifies all of the checksums, generates the corresponding ODEX checksums, signs all of the generated ODEX checksums (advantageously with a single signature) and stores the ODEX checksums and the signature in the cache repository.

The integrity verification module 232 is included in a native library of the APK and has access to the extended JNI library, which allows checking ODEX checksums and the corresponding signatures at any time during the execution. The integrity verification module 232 is configured to, when executed as part of the application, check the signing certificate in any suitable way, check the signature for the ODEX checksums, compute current checksums for the ODEX and compare the computed checksums with the signed (and validated) checksums. It will be appreciated that suitable measures may be taken if any of the checks fail.

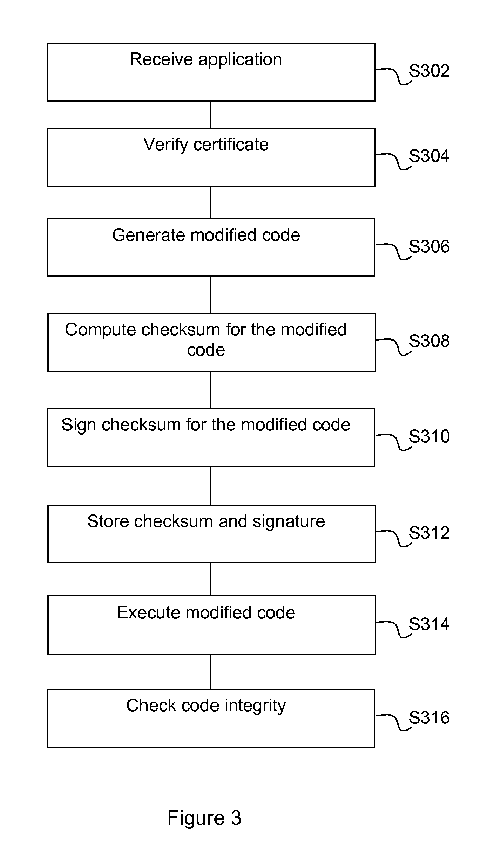

Figure 3 illustrates a flowchart of a method according to a preferred embodiment. In step S302, the device 110 receives the APK file for the application and verifies the APK certificate in step S304. During installation of the application, the device 110 optimizes the DEX in the APK file and obtains an ODEX in a cache repository in step S306. In step S308, the device 110 computes at least one ODEX checksum for the ODEX signs, in step S310, the ODEX checksum using the signing key 215. In step S312, the device 110 stores the ODEX checksum and the signing certificate in the reserved spaces 226, 228 in the cache repository for the application. The device 110 may then at any suitable time execute the ODEX in step S314 and, during the execution, the integrity verification module 232 can check the integrity of the ODEX in step S316 by calculating current ODEX checksums that are compared to the signed ODEX checksums in the reserved space 226. The integrity may be checked a plurality of times during the execution of the application.

It is noted that the solution requires a slight modification to currently deployed Android systems.

In the present description, the term 'checksum' is intended to cover a value that enables verification of whether or not the data for which it was generated has been modified after generation of the checksum. A checksum may thus for example also be a hash value, a Cyclic Redundancy Check (CRC) value or other kind of digest; it is preferred that it is computationally infeasible to obtain the code from the checksum. In addition, while a single checksum has been used for clarity, a plurality of checksums may be used, wherein a checksum may be generated for a distinct part of the code (wherein the different parts may overlap), and that a plurality of checksums for different parts of the code are used to generate a single, global checksum that is used for the comparison. The signature may be any suitable cryptographic signature such as a Hash-based Message Authentication Code (HMAC) or a signature based on for example RSA, Digital Signature Algorithm (DSA) or Elliptic Curve Digital Signature Algorithm (ECDSA).

It will be appreciated that the present solution can counter both root attacks and remote attacks successfully.

While the present solution has been described in an Android environment, it can be adapted to other operating systems that modify the code during installation without enabling secure integrity verification of the installed application at runtime.

It will thus be appreciated that the present disclosure provides a solution that can enable runtime integrity of applications on Android devices.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

## Claims

1. A device (110) for processing an application, the device comprising:
an interface (114) configured to receive the application;
memory (112) configured to store the application and a signed checksum for a modified application; and
a processing unit (111) configured to:
- modify the application to obtain a modified application;
- generate a checksum for the modified application;
- sign the checksum for the modified application using a signing key; and
- store the signed checksum in the memory (112).

2. The device of claim 1, wherein the application comprises a first checksum and wherein the processing unit is further configured to use the first checksum to verify the integrity of the application.

3. The device of claim 2, wherein the first checksum is signed and wherein the processing unit is further configured to verify the signature for the first checksum.

4. The device of claim 1, wherein the processing unit is further configured to use the signed checksum to verify the integrity of the modified application during execution of the modified application.

5. The device of claim 1, wherein the application is implemented as Dalvik Executable code and the modified application is implemented as Optimized Dalvik Executable code.

6. The device of claim 1, wherein the device is a smartphone or a tablet.

7. The device of claim 1, wherein the signing key is protected using software protection techniques.

8. The device of claim 1, wherein the processing unit is configured to generate a plurality of checksums, each of the plurality of checksums being generated for a different part of the modified code and to sign the plurality of checksums for the modified code.

9. The device of claim 8, wherein the processing unit is configured to generate a single signature for the plurality of checksums for the modified code.

10. The device of claim 1, wherein the memory is further configured to store the modified application and a certificate for the signing key, and wherein the processor is further configured to store the a certificate for the signing key in the memory.

11. A method for processing an application comprising at a device (110):
- receiving (S302) the application;
- modifying (S306) the application to obtain a modified application;
- generating (S308) a checksum for the modified application;
- signing (S310) the checksum for the modified application using a signing key; and
- storing (S312) the signed checksum in the memory (112) in the memory (112).

12. The method of claim 11, wherein the application comprises a first checksum and wherein the method further comprises using the first checksum to verify the integrity of the application.

13. The method of claim 12, wherein the first checksum is signed and wherein the method further comprises verifying the signature for the first checksum.

14. The method of claim 11, wherein the method further comprises using the signed checksum to verify the integrity of the modified application during execution of the modified application.

15. The method of claim 11, further comprising storing the modified application and a certificate for the signing key in the memory.
